# EUROPEAN PATENT SPECIFICATION

(11) **EP 0 700 012 B1**
(45) Date of publication and mention of the grant of the patent: **09.05.2001**
(21) Application number: 95112458.5
(22) Date of filing: 08.08.1995
(51) Int. Cl.: G06K 7/10

(54) **A portable optical scanning system worn by a user for reading indicia of differing light reflectivity**
Tragbares optisches Abtastsystem zum Lesen von Zeichen mit verschiedener Lichtreflexion
Système de balayage par scanner optique portable pour lire des signes avec un pouvoir de réflexion différent

(30) Priority: 29.08.1994 US 294845
(43) Date of publication of application: 06.03.1996
(73) Proprietor: SYMBOL TECHNOLOGIES, INC., Holtsville, New York 11742-1300 (US)
(72) Inventor: Bard, Simon, Setauket, NY 11733 (US); Viscount, Brian, Kings Park, NY 11754 (US); Katz, Joseph, Stony Brook, NY 11790 (US); DeVita, Joseph, Patchogue, NY 11772 (US); Fama, Anthony, Mastic, NY 11950 (US); Poloniewicz, Paul, East Setauket, NY 11733 (US); Biuso, Anthony, South Setauket, NY 11720 (US); Wilson, Laura, New Hill, NC 27562 (US); Little, Gary Glenn, Montclair, CA 91763 (US); Barkan, Edward, Miller Place, New York 11764 (US); Fusco, Michael, Smithtown, New York 11787 (US); Chew, Steven, East Northport, New York 11731 (US); Barile, John, Holbrook, New York 11741 (US); Searle, Donald, Setauket, New York 11733 (US)
(74) Representative: Wagner, Karl H., Dipl.-Ing.

(56) References cited:
- EP-A- 0 531 644
- EP-A- 0 541 065
- WO-A-93/14472
- US-A- 5 191 197
- US-A- 5 305 181
- US-A- 5 340 972

## Description

### BACKGROUND OF INVENTION

### Field of the Invention

This invention relates to portable optical scanners for reading indicia of varying light reflectivity and, more particularly, to a portable optical scanning system having the capability to transmit and/or receive information over one or more radio or infrared (IR) frequencies.

### Description of the Related Art

Various optical readers and optical scanning systems have been developed heretofore for reading indicia such as bar code symbols appearing on the label or on the surface of an article. The symbol itself is a coded pattern of indicia comprised of, for example, a series of bars of various widths spaced apart from one another to bound spaces of various widths, the bars and spaces having different light reflecting characteristics. The readers in scanning systems electro-optically transform the graphic indicia into electrical signals, which are decoded into alphanumeric characters that are intended to be descriptive of the article or some characteristic thereof. Such characteristics are typically represented in digital form and utilized as an input to a data processing system for applications in point-of-sale processing, inventory control and the like. Scanning systems of this general type have been disclosed, for example, in U.S. Patent Nos. 4,251,798; 4,369,361; 4,387,297; 4,409,470; 4,760,248; 4,896,026, all of which have been assigned to the same assignee as the instant application. As disclosed in the above patents, one embodiment of such scanning systems includes, inter alia, a hand held, portable laser scanning device supported by a user, which is configured to allow the user to aim the scanning head of the device, and more particularly, a light beam, at a targeted symbol to be read.

The light source in a laser scanner bar code reader is typically a gas laser or semiconductor laser. The use of semiconductor devices as the light source is especially desirable because of their small size, low cost and low voltage requirements. The laser beam is optically modified, typically by an optical assembly, to form a beam spot of a certain size at the target distance. It is preferred that the cross section of the beam spot at the target distance be approximately the same as the minimum width between regions of different light reflectivity, e.g., the bars and spaces of symbol. Bar code readers have been proposed with two light sources to produce two light beams.

Bar code symbols are formed from bars or elements typically rectangular in shape with a variety of possible widths. The specific arrangement of elements defines the character represented according to a set of rules and definitions specified by the code or "symbology" used. The relative size of the bars and spaces is determined by the type of coding used as is the actual size of the bars and spaces. The number of characters (represented by the bar code symbol) is referred to as the density of the symbol. To encode the desired sequence of the characters, a collection of element arrangements are concatenated together to form the complete bar code symbol, with each character of the message being represented by its own corresponding group of elements. In some symbologies, a unique "start" and "stop" character is used to indicate when the bar code begins and ends. A number of different bar code symbologies exist, these symbologies include UPC/EAN, Code 39, Code 128, Codeabar, and Interleaved 2 of 5 etc.

In order to increase the amount of data that can be represented or stored on a given amount of surface area, several new bar code symbologies have recently been developed. One of these new code standards, Code 49, introduces a "two dimensional" concept for stacking rows of characters vertically instead of extending the bars horizontally. That is, there are several rows of bar and space patterns, instead of only one row. The structure of Code 49 is described in U.S. Patent No. 4,794,239. Another two-dimensional symbology, known as "PDF417", is described in U.S. Patent No. 5,304,786.

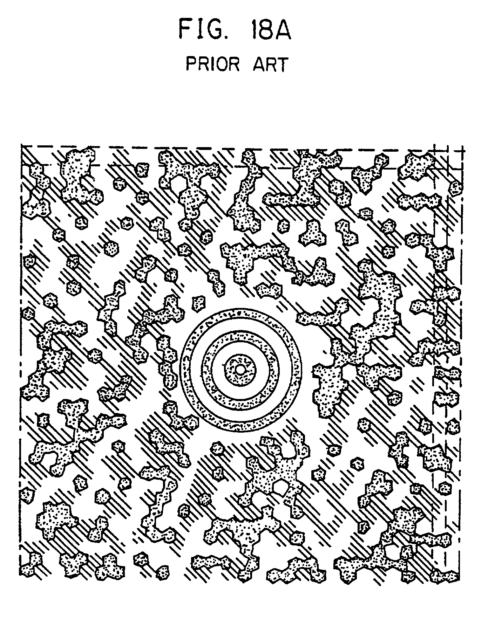

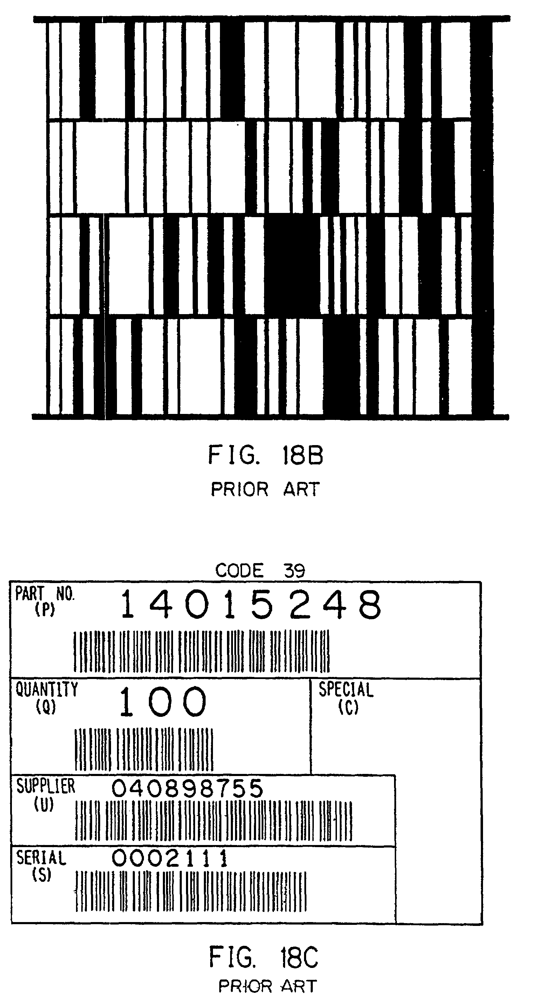

Still other symbologies have been developed in which the symbol is comprised of a matrix array made up of hexagonal, square, polygonal and/or other geometric shapes to form a symbol. Such symbols are further described in, for example, U.S. Patent 5,276,315. Such symbols may include Vericode™, Datacode™ and UPScode™. Prior art Figs. 18A-18C depict known matrix and other type symbols.

In the laser beam scanning systems known in the art, the laser light beam is directed by a lens or other optical components along the light path toward a target that includes a symbol on the surface. The moving-beam scanner operates by repetitively scanning the light beam in a line or series of lines across the symbol by means of motion of a scanning component, such as, the light source itself or a mirror disposed in the path of the light beam. The scanning component may either sweep the beam spot across the symbol and trace a scan line across the pattern of the symbol, or scan the field of view of the scanner, or perform some condition thereof.

Other conventional scanning systems require the physical movement of the scanning unit by the user to obtain a reading from the targeted symbol.

Bar code reading systems also include a sensor or photo detector which detects light reflected or scattered from the symbol. The photo detector or sensor is positioned in the scanner in an optical path so that it has a field of view which ensures the capture of a portion of the light which is reflected or scattered off the symbol. An electrical signal corresponding to the detected light is generated. Electronic circuitry and software decodes the electrical signal into a digital representation of the data represented by the symbol that has been scanned. For example, the analog electrical signal generated by the photo detector is converted by a digitizer into a pulse modulated digital signal, with the widths corresponding to the physical widths of the bars and spaces of a scanned bar code symbol. The digitized signal is then decoded, based on the specific symbology used by the symbol, into a binary representation of the data encoded in the symbol, and subsequently to the alphanumeric characters so represented.

The decoding process of known bar code reading system usually works in the following way. The decoder receives the pulse width modulated digital signal from the digitizer, and an algorithm, implemented in the software, attempts to decode the scan. If the start and stop characters and the characters between them in the scan were decoded successfully and completely, the decoding process terminates and an indicator of a successful read (such as a green light and/or an audible beep) is provided to the user. Otherwise, the decoder receives the next scan, performs another decode attempt on that scan, and so on, until a completely decoded scan is achieved or no more scans are available.

Such a signal is then decoded according to the specific symbology into a binary representation of the data encoded in the symbol, and to the alphanumeric characters so represented.

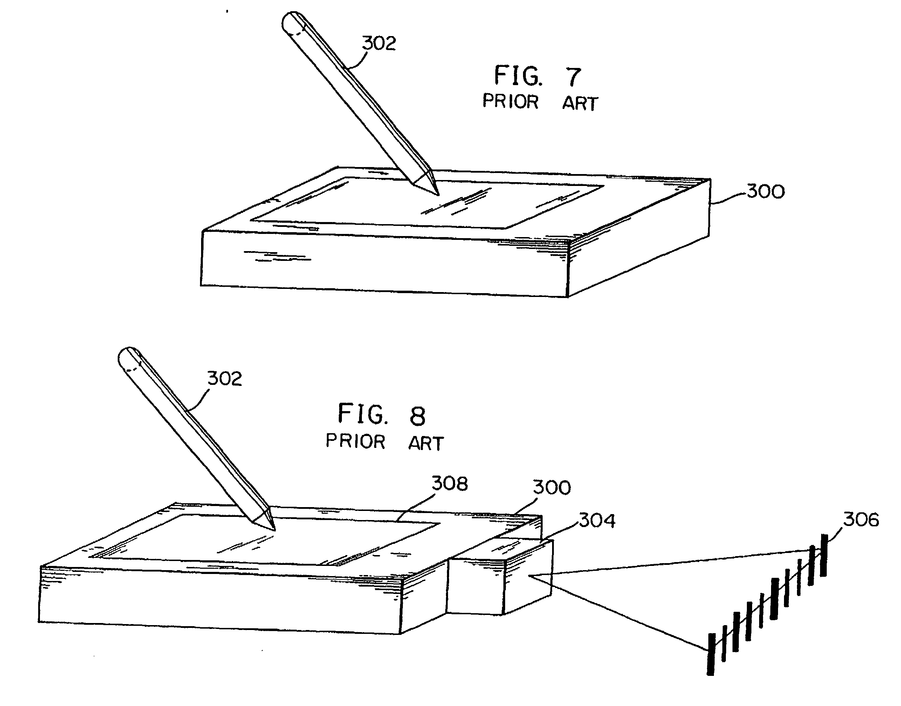

Systems have been developed which incorporate optical indicia reading capabilities in pen computers of the type shown in Figure 7. Typical of these conventional systems is the one shown in prior art Figure 8.

In the Figure 8 system, the computer module has been modified to include a scanning unit 304 which generates a light beam which scans the targeted symbol 306. The scanning unit 304 also includes a photodetector which detects the reflection of light from the symbol and generates an electrical signal representing the scanned symbol 306. The electrical signal may be processed and/or stored in the computer module 300. Module 300 may also include a touch screen display, 308 for inputting data to the system and/or displaying the data representing the symbol.

Moving-beam laser scanners are not the only type of optical instrument capable of reading symbols. Another type of reader is one which incorporates detectors based on charge coupled device (CCD) technology. In such prior art readers the sides of the detector are typically smaller than the symbol to be read because of the image reduction by the objective lens in front of the CCD. The entire symbol is flooded with light from a light source such as a light emitting diode (LED) in the scanning device, and each CCD cell is sequentially read out to determine the presence of, for example, a bar or a space.

The working range of CCD scanners is rather limited as compared to laser based scanners and is especially low for CCD based scanners with an LED illumination source. Other features of CCD based scanners are set forth in U.S. Patent No. 5,210,398. This reference is illustrative of the earlier technological techniques proposed for use in CCD type scanners to acquire and read indicia in which information is arranged in a two dimensional pattern.

Various systems, in addition to those conventional systems described above, have been proposed to improve the ease of use of optical scanning systems. Such systems have included miniature optical scanning modules which include light emitters and detectors which are mounted on a hand. These systems have also included a separate module mounted on the body or arm or wrist of a user with a wire communication link to the optical scan module. Such systems have also included wireless communication devices to allow communications between the second module and a base station, typically using radio frequency communications. However, such systems are either cumbersome, in that they require the user to wear a vest or belt or other body mounting apparel or require the use of a restrictive hand mount. One such system requires the use of a glove in which the wire for communications between the optical scan module and second module are transmitted. Further, systems which require only a hand mounted optical scan module and wrist/arm mounted second module have had capacity limitations which limit the amount of processing and data storage which can be performed by the portable modules.

As noted above, pen computers have also been proposed for use in optical scanning applications. However, locating the optical scan module in the computer module may be ergonomically disadvantageous since it may be difficult for the user to orient the computer module in the necessary direction in order to get a satisfactory reading of the indicia. Incorporating the optical scan module in the pen module requires a communications line to transmit a signal representing the indicia to the computer module. Additionally, incorporating the optical scan module with both light emitting and light detecting devices in the pen module causes an increase in the physical size and weight of the pen. It will be understood that these size and weight increases are caused by both the additional components and the battery cells required to power them.

EP-0 541 065 discloses an optical scanning system for reading indicia (a bar code). The system comprises a scanner mounted within a housing supported by a ring mount mounted on a finger of the user. The scanning system further comprises a portable control terminal mounted on the wrist or arm of the user using a band. The scanner is connected to the portable control terminal using a wire. The portable control terminal comprises a digitizer, a decoder, keys and a display. The portable control terminal further includes an antenna for communicating with a central computer and for transmitting decoded bar code data to the central computer.

A need exists for a portable optical scanning system which is ergonomically more acceptable to users.

It is a general object of the present invention to provide an improved portable indicia reader.

Thus, it is an object of the present invention to provide a portable optical scanning system which is more comfortably mounted on the user's body.

It is a further object of the invention to provide a portable optical scanning system which can be mounted on the user without the need for a vest, glove or other restrictive apparel being worn by the user.

It is a still further object of the present invention to provide a portable optical scanning system which does not require wires between system modules.

A still further object of the invention is to provide a portable optical scanning system with improved ergonomics.

Additional objects, advantages and novel features of the present invention will become apparent to those skilled in the art from this disclosure, including the following detail description, as well as by practice of the invention. While the invention is described below with reference to preferred embodiments, it should be understood that the invention is not limited thereto. Those of ordinary skill in the art having access to the teachings herein will recognize additional applications, modifications and embodiments in other fields which are within the scope of the invention as disclosed and claimed herein and with respect to which the invention could be of significant utility.

### SUMMARY OF THE INVENTION

In accordance with the invention, there is provided an optical scanning system for reading indicia of differing light reflectivity as defined by claim 1.

According to a first embodiment, an optical scan module includes a light emitter, for emitting light onto the indicia and a light detector for detecting the reflection of light from the indicia. The optical scan module is adapted to be mounted on at least one finger of a user. In the preferred arrangement, the module has a housing with a ring shaped portion which is worn on a single finger of the user. A triggering device may be used to activate the scan module. The triggering device might be any of a number of movable mechanisms or could be in the form of active or passive photosensors. Whether or not a triggering device is provided, it is preferable for the scan module to be operable in a non-triggering mode.

The system includes two peripheral modules. A first peripheral module has a receiver for receiving a first signal corresponding to the detected reflection of light from the optical scan module. The first peripheral module is adapted to be mounted on one arm or wrist of the user. Preferably, if the optical scan module is mounted on the right hand, the first peripheral module is mounted on the right arm or wrist. Likewise, if the optical scan module is mounted on the left hand, the first peripheral module is preferably mounted on the left arm or wrist. The second peripheral module has a radio frequency receiver, which is preferably a transceiver, for receiving a second signal corresponding to the first signal from the first peripheral module. If a transceiver is provided, it can also be used to transmit a third signal corresponding to the second signal to, for example, a base station.

If desired, a power supply such as a battery can be located in the first peripheral module and an electrical wire or other type of electrical conductor, provided for transmitting power from the first peripheral module to the optical scan module. The electrical conductor may be retractable into the first peripheral module so that only that length of wire required to extend between the scan unit and first peripheral module is exposed. The optical scan module may also include a radio frequency transmitter and the first peripheral module a radio frequency receiver to facilitate communication of the first signal.

The first signal, typically, although not necessarily, includes an analog signal generated by a photosensor in the optical scan module which corresponds to the detected light reflected from the indicia. It is possible to process the first signal, in whole or part, in the first peripheral module. However, it is not required that any processing be performed by the first peripheral module. Thus, the second peripheral module may include a digitizer or other typed analog/digital conversion means for performing conversion of the second signal to a pulse width modulated digitized signal. The second peripheral module may also beneficially include a processing circuitry and/or software for processing the digital signal. The processor can, for example, include a decoder for decoding information, i.e., the information originally encoded in the indicia, contained in the digitized signal. The second peripheral module may also include an indicator for signaling the user when the decoding has been successfully accomplished by the decoder.

According to other preferred features of the first described embodiment of the invention, the second peripheral module can also be provided with a radio frequency or infrared transmitter for transmitting the decoded information to a base station. If desired, the second peripheral module may also include a keypad display or touch screen for inputting data to the system and displaying the decoded information. The aforementioned transmitter can be used for transmitting the input data to a radio frequency or infrared receiver or transceiver included as part of the first peripheral module. Preferably, the transmitter is a transceiver which can also be used to receive data from, for example, the base station and/or the first peripheral module. The system may also include a third peripheral module, adapted to be mounted on or carried by the user, which has a power supply for supplying power to the second peripheral module.

In a second embodiment of the present invention, the second peripheral module, like the first peripheral module, is also mounted on an arm or wrist of the user. Preferably, if the first peripheral module is mounted on the right arm or wrist, the second peripheral module is on the left arm or wrist of the user. Likewise, if the first peripheral module is mounted on the left arm or wrist, the second peripheral module is on the right arm or wrist of the user. The system according to the second embodiment may include a base station for receiving the digitized signal from the second peripheral module. The base station is preferably located in the range of 25 to 150 feet from the user. In one beneficial arrangement of the system, the scan unit and peripheral modules are wireless and communicate between each other and with the base station by radio frequency or infrared communications.

Preferably, the first peripheral module has processing capabilities. The first signal, which is an analog signal, is converted to a digital signal by a digitizer or other analog/digital converter provided in the first peripheral module. The first peripheral module may also include a processor for processing the digital signal. The processor can, if desired include a decoder for decoding information contained in the digital signal, i.e., the information encoded in the indicia. An indicator may also be provided in the first peripheral module for signaling the user when the decoding has been successfully accomplished by the decoder. If the decoding is performed by the first peripheral module, the second signal which is transmitted to the second peripheral module will contain the decoded information.

Preferably, the second peripheral module is mounted on the arm or wrist of the user which is different from the arm or wrist from which the first peripheral module is supported. The second peripheral module may beneficially include a data storage device, typically some type of electronic or magnetic memory, for storing the decoded information. The second peripheral module may also include a radio frequency or infrared transmitter or transceiver for transmitting the decoded information to a base station or another module worn by the user. If desired, the second peripheral module can also include a keypad display or touch screen for inputting data to the system and displaying the decoded information. The second peripheral module's receiver may, more preferably, be a first radio frequency transceiver capable of transmitting the input data as well as receiving the second signal from the first peripheral module. The first peripheral module also preferably has a second radio frequency transceiver capable of transmitting the second signal and receiving the transmitted input data. The system may also include a third peripheral module mounted on or carried by the user with a power supply for supplying power to the second peripheral module.

Preferably, optical scan module housing has a ring shaped portion adapted for single finger mounting.

With respect to all the above described embodiments of the invention, the frequency of the radio frequency signals is preferably selectable by the user and may beneficially be in the range of 902 and 928 MHz, or 2.4 GHz, for use within certain geographic regions or at approximately 433.9 MHz, for use in certain other geographic regions. Depending upon the applicable communications regulations the frequencies for usage of the invention within different countries or regions will vary. Also the transmitters, receivers and transceivers may beneficially include an interface, conforming to an RS232 standard, to facilitate communications with other peripheral modules or devices. A filter for filtering the received signals may also be included. The optical scan unit or module housing may be rotated with respect to the ring mounting so that the direction of the emitted light beam can be easily adjusted by the user. The scan unit or module housing may also be detachable from the ring to allow easy substitution of scan units or modules for different tasks and/or different ring sizes to be utilized.

A microphone may be provided for receiving an audio command from a user and generating a signal corresponding to the audio command. A peripheral module includes a multiplexer for receiving the signal along with a signal representative of the reflected light detected by the light detector. The two signals are multiplexed to form a single multiplexed signal. Processing circuitry within the peripheral module receives the multiplexed signal and processes it to decode information represented by the indicia and recognize the audio command. The processing circuitry can then generate a signal to activate the optical scan module in response to the recognized audio command.

In an alternate arrangement, the signal corresponding to the audio command is filtered through a passband filter in the peripheral module. A noise analyzer is also provided in the peripheral module for analyzing the unfiltered signal to identify background noise within the signal. An output signal corresponding to the level of the background noise is generated by the analyzer. A signal level detector compares the filtered signal to parameters adjusted in accordance with the output signal to identify said audio command.

### BRIEF DESCRIPTION OF THE DRAWINGS

Figure 1 depicts a portable optical scan system which is not an embodiment of the invention.

Figure 2 depicts a portable optical scan system in accordance with the first embodiment of the invention.

Figure 3 depicts a second embodiment of the portable optical scanning system of the present invention.

Figure 4 depicts the portable optical scanning system which is not an embodiment of the invention.

Figure 5 depicts a portable optical scanning system which is not in accordance with the invention.

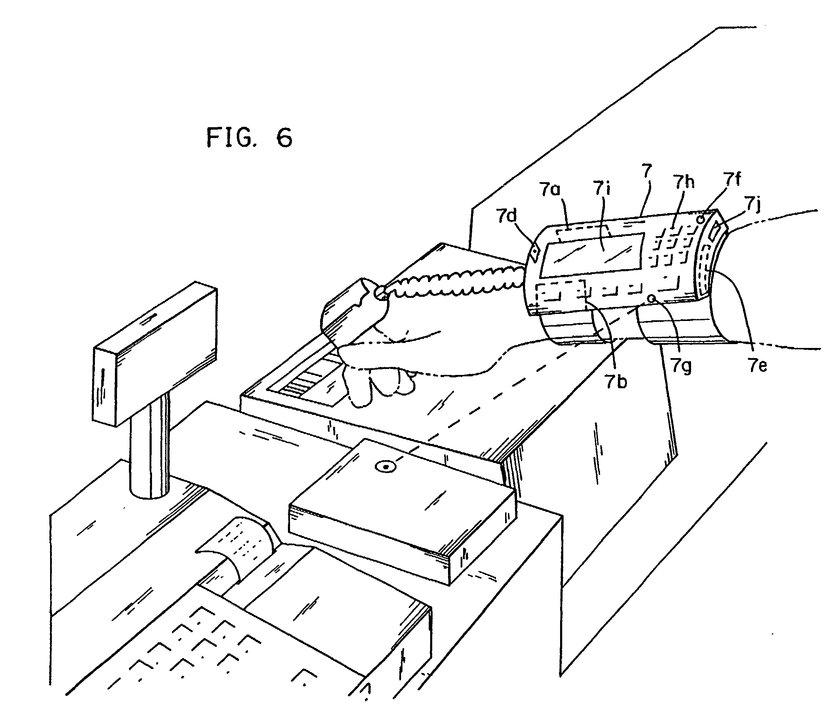

Figure 6 depicts the portable optical scanning system of Figure 5 used in a practical application.

Figure 7 depicts a conventional pen computer.

Figure 8 depicts a conventional pen computer with a scanner module.

Figure 9 depicts a pen scan module and computer with wireless communication links.

Figure 10 depicts a pen scanner and computer which are not in accordance with the present invention.

Figure 11 depicts a second configuration of the pen computer which is not in accordance with the present invention.

Figure 12 depicts a ring scanner and arm/wrist mounted peripheral module which is not in accordance with the present invention.

Figures 13A and 13B depict a single finger ring having a mount suitable for use in Figures 2, 3, 5 and 12.

Figure 14 depicts a cable retraction mechanism adapted for use in Figures 2, 3 and 5.

Figures 15A and 15B are block diagrams of voice recognition subsystems.

Figures 16A and 16B are respectively a block diagram of an indicator subsystem and a list of status/conditions of which a user can be notified using the Figure 16A subsystem.

Figures 17A-17D depict alternative mountings not in accordance with the invention for the optical scan modules of Figures 2, 3, 5 and 12.

Figure 18A-18C depict symbols conforming to various prior art symbologies.

### DESCRIPTION OF THE PREFERRED EMBODIMENT

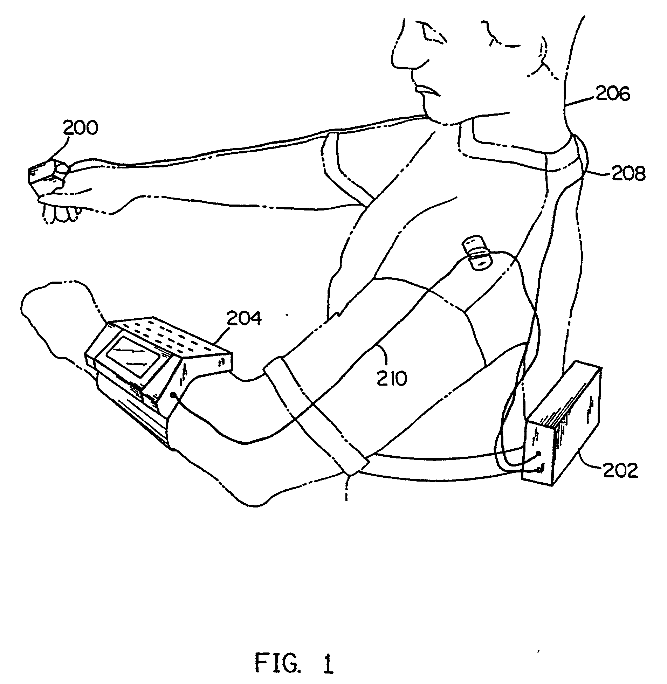

One type of portable scanning device which is not in accordance with the invention is shown in Figure 1. The device includes a hand mounted scanning unit 200 which includes an optical scanner. The optical scanner has a light generator, such as a laser diode, for producing a light beam which is scanned across the target symbol. The scanner unit 200 also includes a photodetector for detecting the reflection of light from the light beam off symbol and for producing an electrical signal corresponding to the detected light and representative of the symbol. The scanning unit may be activated by a triggering mechanism, such as a movable trigger switch or by triggerless means, for example, using active or passive photosensoring.

A battery pack 202 is also mounted to the user 206 and provides power to the scanning unit 200 through cable 208. Module 204 which might typically include signal processing and data storage subsystems is mounted to the user's wrist or arm opposite the hand on which the scanning unit 200 is mounted. As shown, the scanning unit 200 is mounted on the user's right hand and the module 204 is mounted on the user's left wrist, however the side of the body upon which each is located could be reversed if so desired. Alternatively unit 200 and module 204 could be supported by the hand and arm on the same side at the user's body, for example, the right hand and arm. The module 204 is also connected to battery pack 202 by cable 202 which facilitates the transmission of electricity to the power module 204. Cables 208 and 208 also serve as a conduit for a communications link between scanning unit 200 and module 204. Signals generated by the photodetector in scanning unit 200 are transmitted to module 204 via this communication link for processing and/or storage.

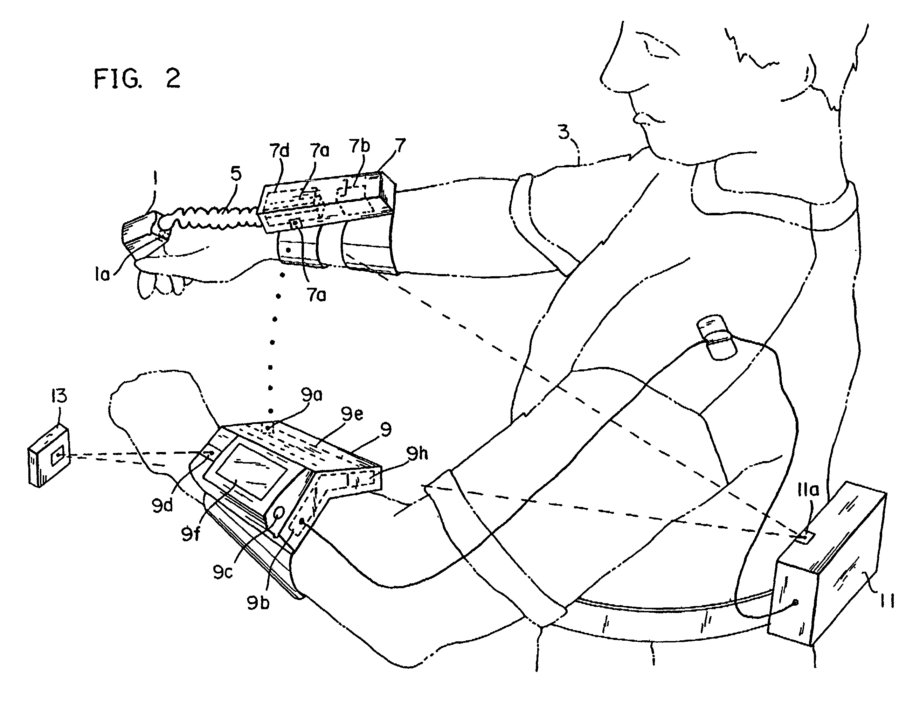

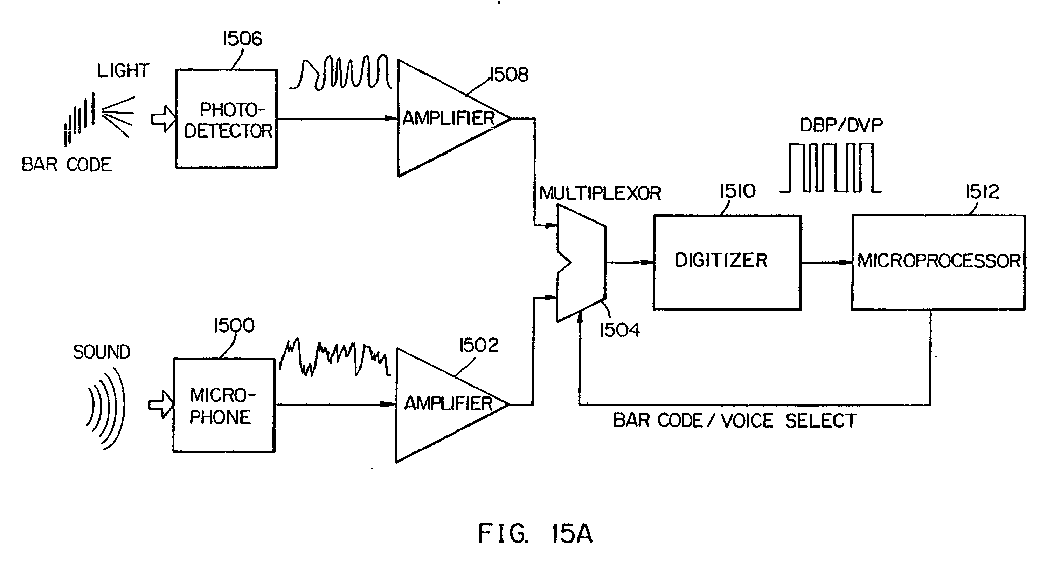

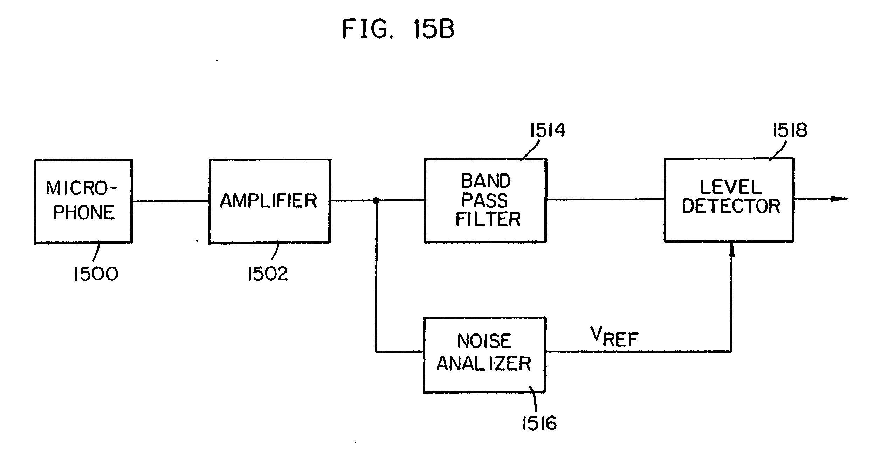

Figure 2 shows a portable optical scan system in accordance with a first embodiment of the present invention. An optical scan module 1 is detachably mounted on a single finger of a user 3 using a ring shaped mounting. The detachable mounting may be of any number of conventional types suitably adapted for its ease of use for the desired application. For example, a ball and flexible socket mounting or a slide mounting could be used. Other mountings with movable restraining members might also be used. The optical scan module 1 includes a light emitter and light detector. The light emitter typically includes an optical component such as a mirror and lens as well as a mechanism for oscillating or reciprocating components of the light emitter to cause a scan across the target indicia. The light emitter and detector are beneficially activated by a switch which may be responsive to sound or to light level variations or to physical or manual operation. The switch might, for example, include a manually operated trigger switch or an active or passive photosensor. In the preferred embodiment, the switch can optionally be locked in an "on" position so that the scan module components remain activated without, for example, the need to continue to squeeze a trigger. Voice activation is preferably implemented as described below with reference to Figures 15A and 15B.

An electromagnetic device and spring assembly or scan motor or other means can be used to drive the scan function. Alternatively, the scan can be performed with stationary light emitter components by physically moving the optical scan module 1 across the indicia.

The light emitter will typically include one or more light generators, for example light emitting or laser diodes, which are housed in the optical scan module 1. The optical scan module 1 may also include one or more light detectors which are typically photosensors such as a charge coupled or other solid state imaging device or photodetector such as photodiodes. These components could alternatively be housed in the first peripheral module 7. If a charge coupled device or other imaging device is utilized, it may be possible to detect the reflection of either ambient light or emitted light from the targeted indicia.

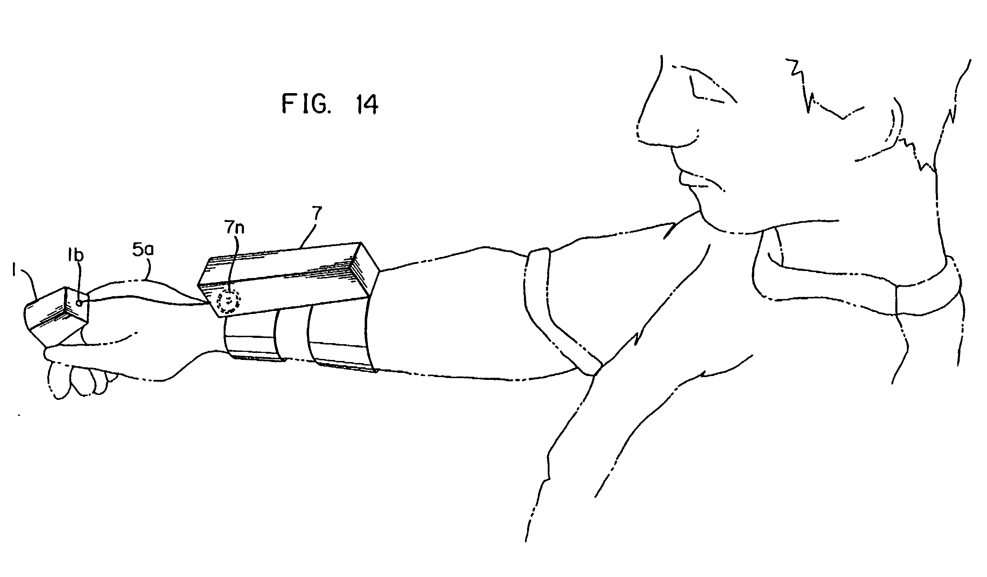

The optical scan module 1 is connected to a first peripheral module 7 by a flexible cable 5. The cable 5 is preferably retractable so that a minimum length of cable is exposed during operation. The retraction mechanism may be adapted from any of a number of conventional retraction techniques and systems. For example, recess 7m in first peripheral module 7 is provided for retracting cable 5. A more sophisticate retraction system is shown in Figure 14. The first peripheral module 7 preferably houses a power supply 7a for powering the components of optical scan module 1. Module 1 is connected to the power supply 7a by an electrical conductor, such as a copper wire, in cable 5. The power supply would typically be a battery. Alternatively, the power supply could be located in optical scan module 1, however this may reduce the operating time between recharge or replacement of the battery.

The first peripheral module 7 also includes a receiver 7b for receiving a signal corresponding to the detected reflection of light representing the target symbol from the optical scan module 1 via cable 5. The signal may be in the form of an electrical signal generated by a photosensor or photodetector located in Module 1. Also included in peripheral 7 is a radio frequency (RF) or other wireless transmitter 7c which is used to transmit a signal corresponding to the detected reflection of light, i.e. representative of the target symbol, from the first peripheral module to a second peripheral module 9 which is located on the left arm or wrist of the user. The transmitter 7c could be a transceiver which is also capable of receiving signals from a second peripheral module 9 or base station 13.

The first peripheral module 7 is preferably mounted on the same side of the user's body as the optical scan module 1. Thus as shown, optical scan module 1 is mounted on a single finger of the right hand and the first peripheral module 7 is mounted on the right arm/wrist of the user. Depending on the user's preference, the various modules could be switched so that the optical scan module 1 and first peripheral module 7 are mounted on the left hand and arm/wrist and optionally, a second peripheral module 9 is mounted on the right arm/wrist.

The optical scan module and the first peripheral module may optionally include, either together with or in lieu of cable 5, a wireless transmitter la and wireless receiver 7d in combination with, or in lieu of, cable 5 for facilitating communications of the signal corresponding to the detected reflection of light from the targeted indicia.

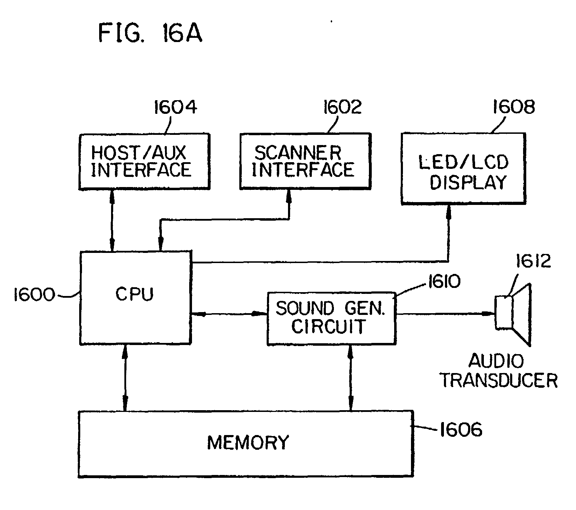

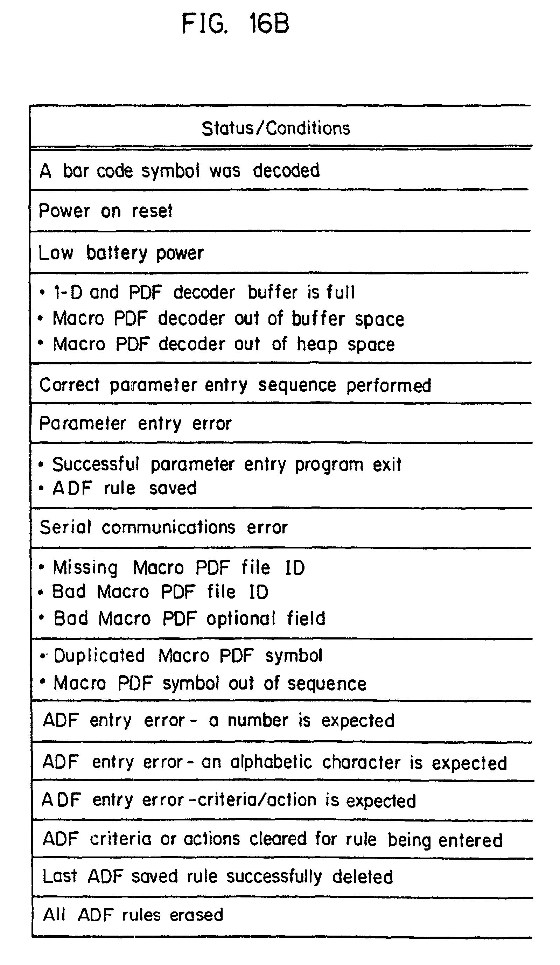

The electrical or optical transmitted signal from optical scan module 1 to the first peripheral module 7 can be further transmitted, typically in a transformed state, via radio frequency transmitter 7c to a radio frequency receiver 9a of the second peripheral module 9 or the base station 13, or to a third peripheral device 11. If both transmissions are by a wireless link, the transmission frequencies will typically be different. The second peripheral module 9 includes digitizing and processing circuits 9b which convert the transmitted analog signal to a digital signal and decode the signal in the conventional manner. An indicator light, beeper or audio transducer 9c signals the user when the decoding has been satisfactorily accomplished. Such notice could also or alternatively be provided by information displayed on 9f. An indicator subsystem in accordance with the present invention is described below with reference to Figure 16. The second peripheral module 9 also preferably includes a memory storage device 9h to temporarily store the decoded data. The second peripheral module may also have a radio frequency transmitter 9d to transmit decoded data to a base station 13, which could, for example, be a personal or other computing device. A keypad 9e and display 9f are also included as part of the second peripheral module. A touch screen could alternatively be used in lieu of the keypad and display. The keypad 9e is used for inputting data to the system and the display 9f is used to display the input data and decoded information. The input data can also be transmitted via the radio frequency transmitter 9d to, for example, the base station. A third peripheral device 11 is optionally provided for a power supply to power the second peripheral module and/or for a transceiver 11a for receiving and transmitting signals from and to the first peripheral module 7 and the base station 13. The power supply as shown is mounted to a belt worn by the user 3. Alternatively, a battery could be included as part of the second peripheral module 9.

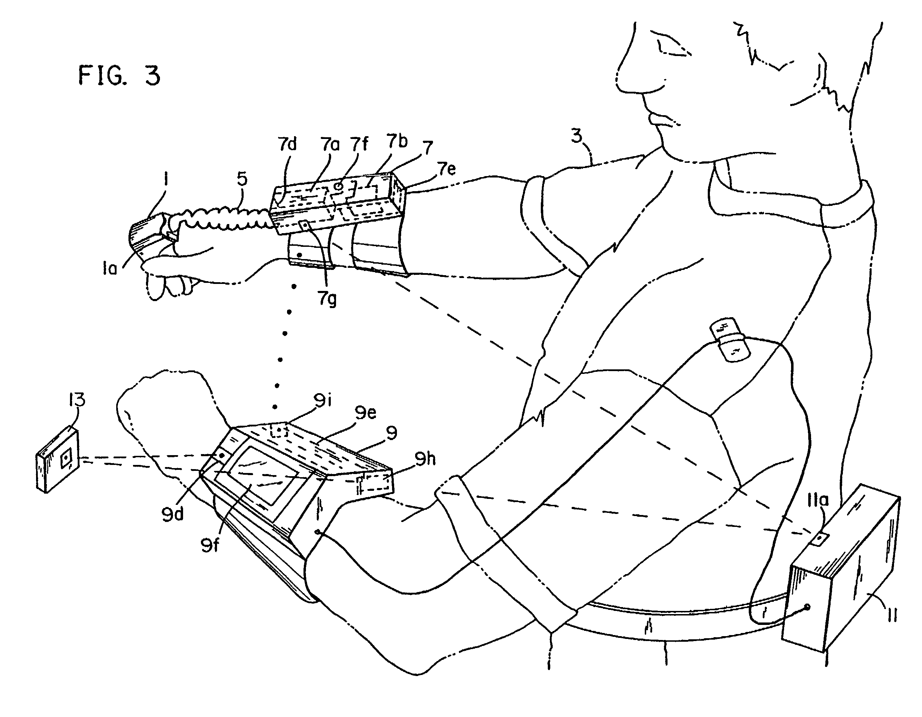

In Figure 3, a second embodiment of the portable optical scanner of the present invention is shown. This embodiment is similar to the embodiment of Figure 2 and like components are designated with same numeric reference. In the Figure 3 embodiment, the analog to digital conversion and decoding of the signal are performed by the processor 7e in the first peripheral module 7. The first peripheral module 7 also has an indicator light or beeper 7f which signals the user when the decoding has been satisfactorily performed. Thus, no processor and beeper is required in the second peripheral module 9. As in the above described embodiment, the second peripheral module includes an electronic storage device 9h for storing the decoded data. It will be understood that although keypad 9e and display 9f are shown, a touch screen could be easily substituted therefor in the conventional manner. Additionally, Figure 3 shows a radio frequency transceiver 9i substituted for the receiver 9a of Figure 2. The transceiver 9i is not only capable of receiving a radio frequency transmission from the first peripheral module but can also transmit data input via the keypad to the first peripheral module 7. Likewise, a radio frequency transceiver 7g is substituted for transmitter 7c in the first peripheral module so that it can receive the input data from as well as transmit the decoded information to the second peripheral module. Except as noted in the above, all components of the optical scanning system depicted in Figure 3 are identical to those described with reference to Figure 2 above.

In the Figure 3 split scanner configuration, a transmitter 1a is provided in the optical scan module 1 and a receiver 7d is provided in the first peripheral module 7. In such a configuration, there is no feedback or two-way communications between the optical scan and first peripheral modules. various manual methods could be used to turn on and off the light emitter of optical scan module 1 and/or processor 7e of first peripheral module 7. However, it is more advantageous for these components to be automatically activated and deactivated so as to reduce unnecessary power consumption without adding complexity to the efficient operation of the system. It is particularly desirable for the processor 7e to be activated only when necessary for decoding targeted indicia and for the light emitter to be deactivated once satisfactory decoding of the targeted indicia has been achieved.

To provide automatic activation/deactivation of the emitter and/or processor, the receiver 7d optionally includes object sensing circuitry such as that previously disclosed in, for example, U.S. Patent Nos. 4,933,538 and 5,250,791 which are issued to the assignee of all rights in the present invention. A portion of the circuitry of receiver 7d, which consumes a relatively small amount of power from the power source 7a, is activated, either continually or periodically, whenever the portable optical scan system of Figure 3 is activated by a trigger switch or other system activation mechanism of the type described previously. The object sensing circuitry checks for a received signal indicative of indicia of the type being targeted. If the check reveals that a received signal is representative of, for example, a bar code symbol of the desired type, the object sensing circuitry generates a signal to activate the remaining portion of the receiver 7d circuitry and the processor 7e. The fully activated receiver 7d transmits, to processor 7e, the received signal which represents the spatial intensity variation of the targeted symbol. The processor 7e then processes and decodes the signal from receiver 7d. Once the decoding has been completed, or after the expiration of a predetermined time period following full activation of the receiver 7d and processor 7e, a portion of the circuitry of the receiver 7d and the processor 7e are automatically deactivated and the object sensing circuitry again goes into a continuous or periodic checking mode to check for a received signal indicative of the desired type of indicia.

The light emitter and, if desired, the detector can be activated/deactivated by connection to a timeout circuit or an audio signal sensing means. In the former case, a conventional clock or timing circuit is connected to the light emitter and/or detector circuitry to automatically deactivate the light emitter and/or detector after a preset period of time has expired subsequent to the activation of the emitter and detector by the trigger switch or other system activation mechanism. For example, if the receiver/processor is capable of receiving and decoding one symbol per second, the clock circuitry may be beneficially set to automatically deactivate the light emitter and/or detector one second after activation to avoid a double read of the same symbol. If desired, the clock circuitry could be implemented so that timed deactivation does not occur when the operator has set a lock on the trigger switch. When the trigger switch is locked, the light emitter and detector remain in a continuously activated state, which may be preferable for certain operations. After deactivation, the emitter and/or detector are reactivated by, for example, releasing and resqueezing the trigger switch to rescan the same symbol, if satisfactory decoding has not been achieved, or to scan another symbol.

Alternatively, the emitter and/or detector are connected to a conventional audio sensor for sensing the audio signal produced by beeper 7f. Such sensors typically include an acoustic transducer and associated receiver circuitry, as is well understood in the art. The beeper 7f provides an audible indication of the satisfactory decoding of the scanned indicia. Upon sensing the beeper signal, the light emitter and/or detector are deactivated. After deactivation, the emitter and/or detector are reactivated by, for example, releasing and resqueezing the trigger switch to scan another symbol. Since deactivation using the audio sensor only occurs after confirmation of satisfactory decoding, reactivation to rescan a symbol is not required. If desired, the audio sensor can be implemented such that deactivation, based on reception of the beeper signal, does not occur when the operator has set a lock on the trigger switch.

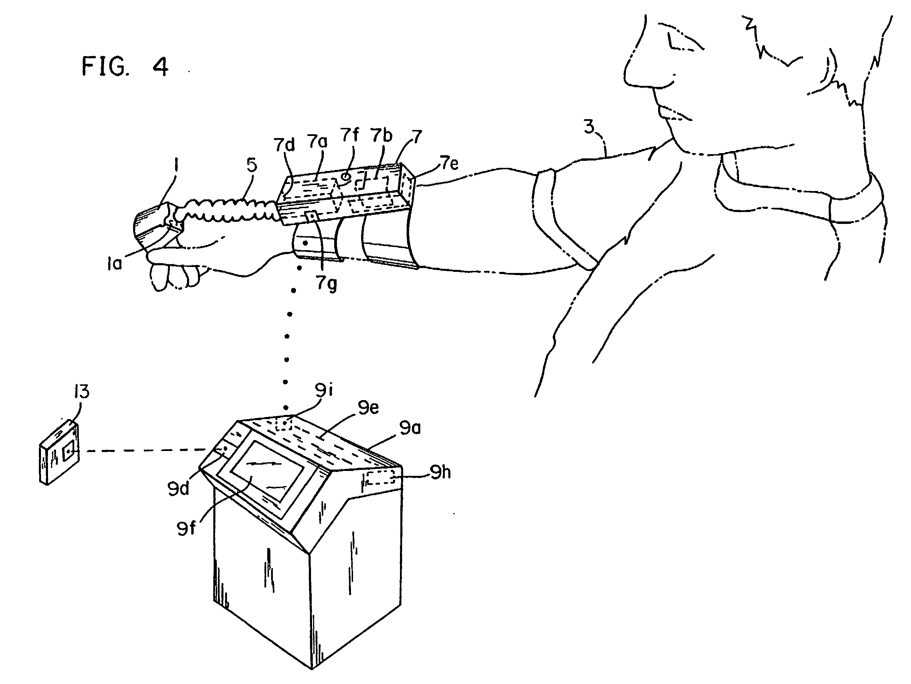

Figure 4 shows an optical scan system which is not in accordance with the invention. This system of Figure 4 is similar to that shown in Figure 3 except that the second peripheral module 90 is located 25 to 150 feet from, rather than mounted on, the user. Although this specific range is preferred, it should be understood that implementation is not limited to this or any other specific transmission ranges.

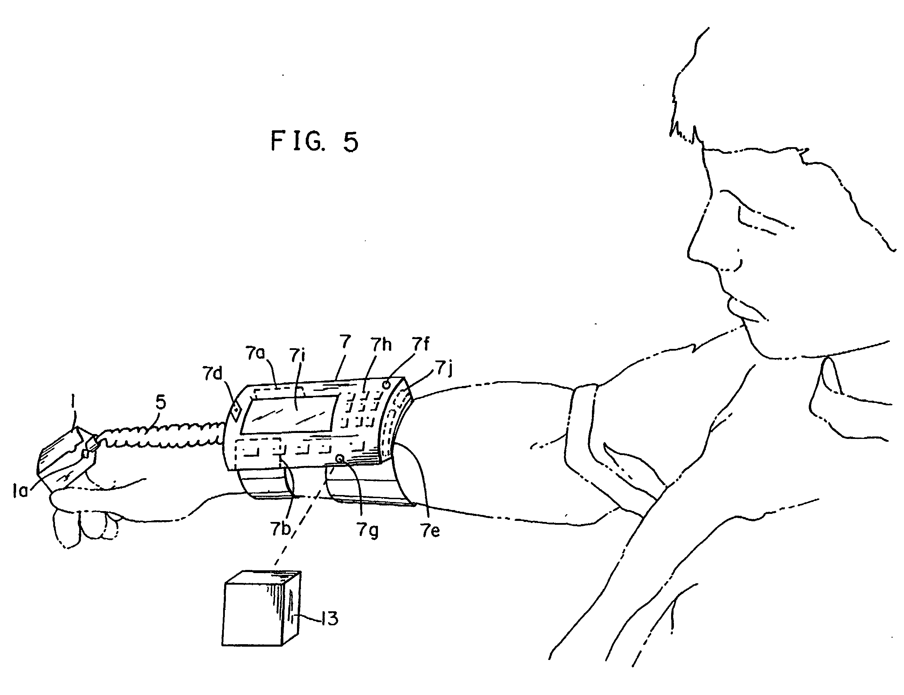

Figure 5 shows still another arrangement which is not in accordance with the invention. In this arrangement, the first peripheral module includes all of the components described in connection with Figure 4 and additionally includes a keypad 7h and display 7i. As noted above, a touch screen can be substituted in the conventional manner for the keypad 7h and display 7i. Additionally, electronic memory storage 7j is included in the second peripheral module for storage of the decoded data. The second peripheral device is completely unnecessary. Base station 13 is preferably located between 25 and 150 feet from the user.

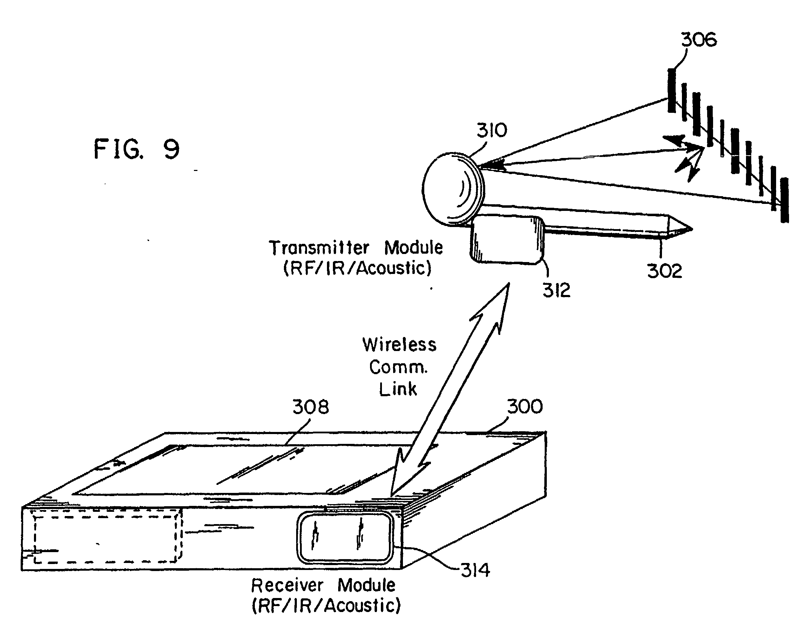

In the Figure 9 system which is not in accordance with the invention, the pen computer has been modified such that pen module 302 includes a scanning unit 312 which generates a light beam which scans the targeted symbol 306 by physically moving the pen 302 across the target symbol 306. The scanning unit 312 also includes a photodetector which detects the reflection of light from the symbol and generates an electrical signal representing the scanned symbol 306. The electrical signal is transformed into a radio frequency, infrared, acoustic or other modulated wireless communication signal and transmitted by transmitter 312 to the computer module receiver 314. The received signal may be processed and/or stored in the computer module 300. Module 300 may also include a touch screen display, 308 for inputting data to the system and/or displaying the data representing the symbol.

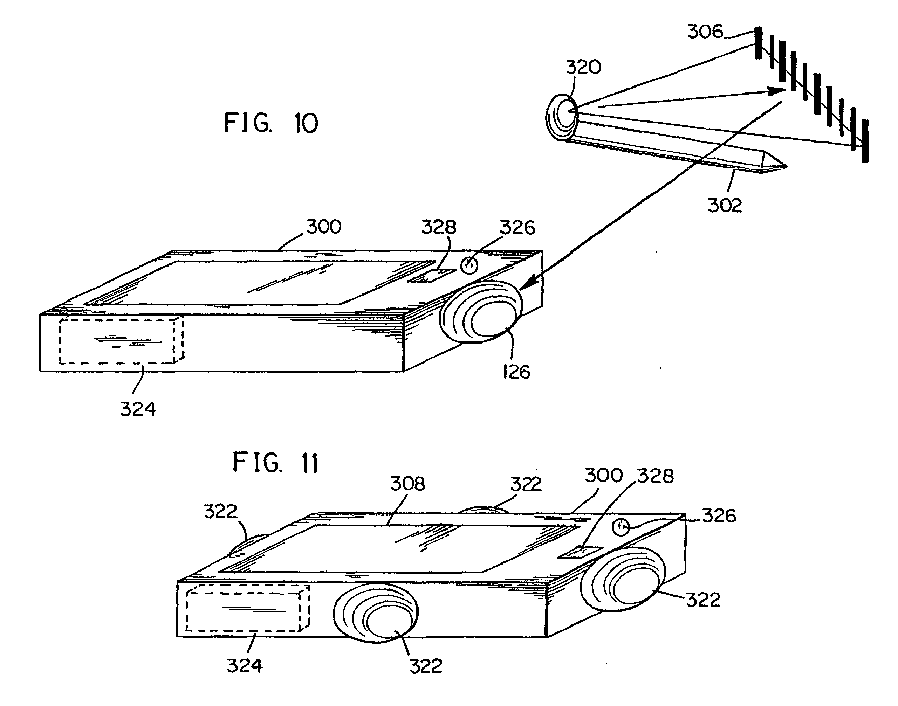

Figure 10 shows a pen computer optical scanning system which is not in accordance with the present invention. The pen 302 includes a light emitting module 320 which generates and directs light towards the indicia 306 to be read. The module includes components of the type described above. The computer module 300 includes a detector 322 which detects reflected light from the target indicia. The detector 322 can be a photodiode or sensor, such as a charge coupled or other solid state imaging device. The processing of the detected reflection of light could, as is conventional, be performed within computer module 300. Figure 11 shows a further configuration of the computer module 300. In this configuration, the computer module has multiple detectors 322 to allow greater flexibility in the positioning of computer module 300 during scanning operations. The computer module 300 has a processor 324 which includes an analog to digital converter, and/or decoding circuitry and software. The computer module also includes an indicator light or buzzer 326 for signalling the user when the decoding has been successfully accomplished. An electronic data storage diode is also included in the computer module. A keypad display and display (not shown) or touch screen 308 is located on a face of the computer module for inputting data and displaying the decoded information. A receiver which together with the transmitter forms a transceiver 328 is also included in the computer module so that data can be received from and sent to the base station or other peripheral modules (not shown). The transceiver 328 can be of a radio frequency, acoustic or infrared type depending on the application and preferably operates in the range of 25 to 150 feet.

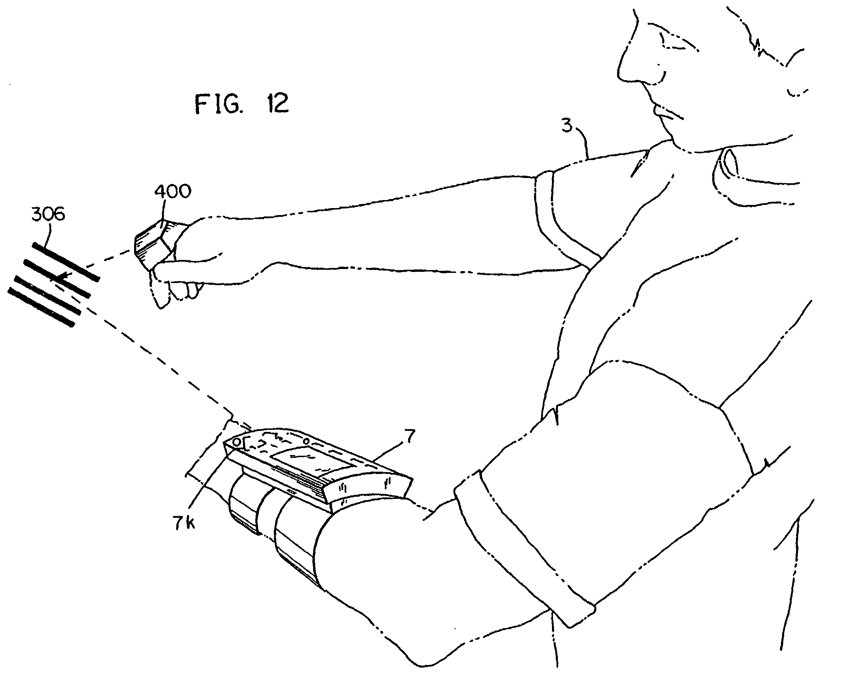

Figure 12 depicts a further arrangement which is not in accordance with the invention wherein the optical scan module 400 is mounted on a single finger ring. The module 400 includes a light emitter similar to that used in the pen computer scanners described above with reference to Figures 10 and 11. The light emitter generates and directs light towards the indicia 306 to be read. The peripheral module 7 mounted on a wrist or arm of the user preferably on the side of the user opposite that of the hand on which the optical scan module 400 is mounted. The peripheral module 7 is identical to that described with reference to Figure 5, except as will be hereafter noted.

Peripheral module 7 includes a detector 7k which detects reflected light from the target indicia 306. Because the reflected light is directly detected by module 7k, wireless receiver 7d is unnecessary and has been eliminated. The detector 7k can be a photodetector or sensor, such as a charge coupled or other solid state imaging device.

The processing of the detected reflection of light would conventionally be performed as described above with reference to module 7. Thus, the peripheral module has a processor which includes an analog to digital converter, and decoding circuitry and/or software. The peripheral module also includes an indicator light or buzzer for signalling the user when the decoding has been successfully accomplished. An electronic data storage device is also included in the peripheral module.

A keypad and display or touch screen (not shown) is located on a face of the peripheral module for inputting data and displaying the decoded information. A receiver which together with the transmitter forms a transceiver is also included in the module 7 so that data can be received from the base station or other peripheral modules (not shown). The transceiver can be of a radio frequency, acoustic or infrared type depending on the application and preferably operates in the range of 25 to 150 feet.

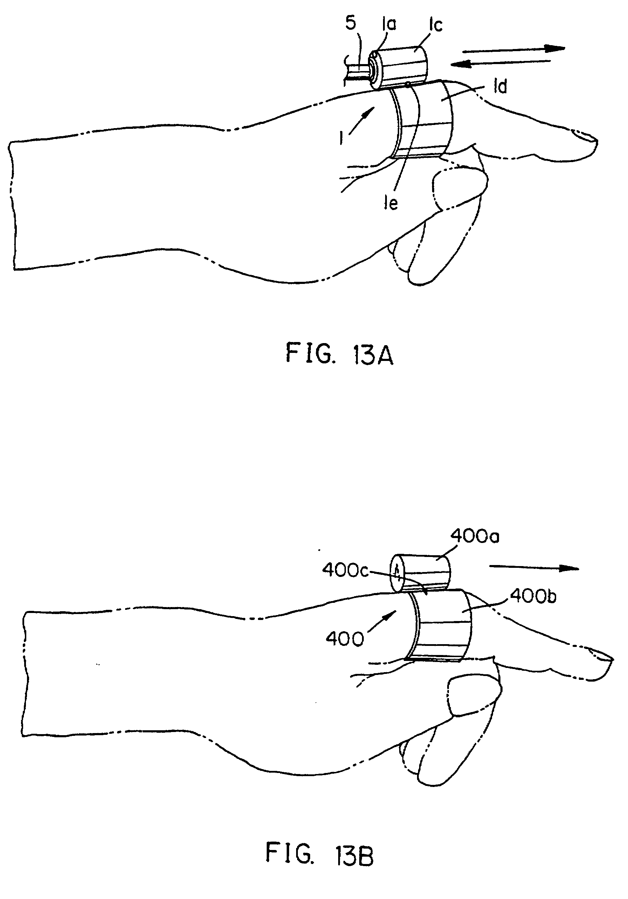

Figures 13 and 13A show a single finger ring housing and mount suitable for use in Figures 2, 3, 5 and 12. More particularly, Figure 13A depicts a housing and mount which is particularly adapted for use in Figures 2, 3 and 5, while Figure 13B depicts a housing and mount adapted for use in Figure 12.

Referring now to Figure 13A, the scan module 1 is connected to cable 5 and optionally includes a wireless transmitter 1a as described above. The scan module housing 1c is attached to a single finger ring mounting 1d. Scanner housing 1c is cylindrical in form, with smooth outer surfaces. The ring portion 1d is also cylindrical in form with smooth outer surfaces. The cylindrical single finger ring mount 1d is attached to the cylindrical housing 1a by means of a pivotal joint 1c. The pivotal joint allows cylindrical housing 1c to be rotated about the pivotal connection 1e so that light is emitted in directions other than the natural pointing direction of the finger on which the assembly is mounted. Thus, for example, housing 1c could be rotated 90° in either direction so as to emit a light beam above the user's thumb or the back of the user's hand, as applicable. The rotation is not limited to 90° but can be any angle which the user deems appropriate under the circumstances.

The pivot connection can, for example, include a plastic bearing or pivot shaft structure which allows movement of the housing only when a physical force is applied, preferably applied by the user's free hand, to the housing 1c. It will be recognized by those in the art that, if desired, the pivot connection could be adapted to allow rotation both in a plane approximately parallel to a plane formed by the back of the user's extended hand, i.e. with fingers extended, as well as limited rotation in another plane approximately perpendicular to the plane formed by the back of the user's extended hand.

Figure 13B depicts a housing and mount configuration, similar to that of 13A, but which houses only the light emitter. The arrangement of Figure 13B is particularly suitable for use in Figure 12, wherein the detection of reflected light off the indicia is performed by a separate unit. Housing 400A and ring 400B are cylindrical with smooth outer surfaces. Rotational connection 400C is identical to connection 1e of Figure 13A and serves an identical function. Connection 400C could likewise be modified to provide rotation in multiple planes as described above.

Figure 14 depicts a retractable cable reel which may be utilized in Figures 2, 3 and 5. As shown in Figure 14, a non-coiled flexible cable 5a has one end fixed or removably mounted to the optical scan module 1. If removably mounted, one end of the cable 5a is connected to a conventional plug-in-socket 1b in the scan module 1. In either case, the other end the cable 5a is retractably mounted to module 7 using reel 7n. Reel 7n is spring loaded. In one configuration, the spring is designed, using conventional techniques, to provide a constant tension force on the cable which is resisted by the user's finger during operation. The constant tension force ensures that there is no slack in the cable during operation and also provides the force necessary to retract the cable onto the reel when the system is not in use. If cable 5a is removably connected to scan module 1 the constant tension force must necessarily be less than a force which would disconnect cable 5a from socket 1b. The constant tension force applied by the spring must also be small enough so as not to make the use and operation of the system uncomfortable for the user.

Alternatively, the spring loaded reel could include a positional locking mechanism. Such mechanisms are commonly incorporated, for example, in the retraction reel used for various commercially available electrical devices such as vacuum cleaners, power hedge trimmers and the like. If such a locking mechanism is utilized, sufficient cable is pulled from the reel to allow comfortable operation by the user. A small amount of slack in the cable is present during operation but there is no tension on the cable which must be resisted by the users finger. When scanning operations are completed, the user simply uses a free hand to sufficiently tension the cable, or to move a lock release mechanism, to release the lock. Once the lock is released, the spring automatically provides the necessary force to cause the cable to be rewound on the reel. Spring loaded cable reels have been described in, for example, US Patent No. 3,657,491.

The cable opening in module 7a is sized to be large enough to allow for the extension and retraction of the cable. The cable opening is smaller than the scan module 1 housing or, in the case of cable which is removably connected to scan module 1, the connector portion of the cable which plugs into socket 1b so as to provide a stop during retraction. Rather than using a spring loaded reel, a motorized reel, similar to that used in a camera with a power film advance and rewind function or described in, for example, US Patent No. 4,842,108, or a manual spool, similar to that used in a fishing reel or camera without power film winding, could be adapted and used in a scanning system of the type described herein.

Figures 15A and 15B are block diagrams of two alternative voice recognition subsystems which may be utilized in any of the described portable optical and pen computer scan systems to facilitate activation of the scan/read, signal processing, data entry, data display and/or signal transmission elements by the user. The subsystems may also be used, if desired, to identify the current user, change the operating modes of system elements and provide a data entry capability additional to, or in substitution for, the keypad or touch screen described above.

Referring to Figure 15A, a microphone 1500, which is customarily mounted to the a headband, helmet or glasses worn by the user but could be mounted using conventional techniques to the mouth, throat, ear or clothing of the user, detects a voice command, such as "GO", from a user. The microphone transmits a clear, identifiable analog spectrum response signal, corresponding to the voice command, to the amplifier 1502 which may be housed together with or separate from microphone 1500. The analog response signal is independent of the user's voice characteristics, such as those reflective of the user's age, sex or accent. The analog response signal is amplified in amplifier 1502. The amplified response signal is transmitted via wire or wireless communications link to multiplexer 1504 which is preferably housed in module 7 or 300.

Such commanding can occur simultaneous with scanning operations. In such cases, an analog read signal, corresponding to the detected reflected light from, for example, a bar code is simultaneously being transmitted by photodetector 1506 to amplifier 1508, amplified by amplifier 1508, and transmitted to multiplexer 1504. The analog signals from the amplifiers 1502 and 1508 are multiplexed in multiplexer 1504 and the multiplexed analog signal transmitted to digitizer circuit 1510. The multiplexed analog signal is converted in digitizer circuit 1510 into a digital pulse signal stream. The width of the each digital pulse signal represents either the bar/space transitions of the bar code or an inflection point in the voice response signal.

The system microprocessor 1512, which includes the previously described processing circuitry used to process the signals generated by the system sensor or photodetector, preferably controls the multiplexer and adjusts the operating parameters, e.g. the sensitivity, of the digitizer circuitry to optimize the circuitry for conversion of the multiplexed voice response and read signals. By counting the number of transitions in a given time period, the microprocessor 1512 determines the frequency of the voice response signal within the selected time period.

The microprocessor then applies the voice response signal frequency measurement to a recognition algorithm, stored for example in the microprocessor's or a separate memory device, and activates the scan/read, signal processing, data entry, data display and/or signal transmission elements, or changes the operating mode of one or more of the elements depending on the results. For example, the operating mode or parameters of the scan/read elements may be adjusted based upon the distance to or density of the target, or the processing circuitry may be activated to download or total data, or the current user may be identified in accordance with the voice command recognized by the algorithm. Alternatively, the voice command may include data to be entered to the system which is recognized by the recognition algorithm and entered on the system as previously discussed but without using the keypad or touch screen.

Figure 15B depicts a block diagram of a second voice recognition subsystem which is somewhat simpler than that of Figure 15A and is primary useful in activating and/or deactivation the scan/read elements. Microphone 1500 and amplifier 1502 are identical to those described with reference to Figure 15A above. The amplified analog voice response signal is transmitted to a band pass filter with a predetermined passband frequency range. The amplified analog voice response signal is also transmitted simultaneously to noise analyzer 1516 which analyses the signal for background noise and transmits a signal corresponding to the results of the analysis to the level detector 1518. The detector 1518 threshold parameters are automatically adjusted for the background noise level based upon the transmitted results of the analysis. The magnitude of the filtered signal is then compared to the adjusted threshold parameters and based upon this comparison a signal is generated and transmitted by the detector 1518 to activate or deactivate the scan/read elements.

Figure 16A is a block diagram of a indicator subsystem and Figure 16B is a list of status/ conditions of which the user can be notified using the indicator subsystem. The indicator subsystem is suitable for use in any of the portable optical and pen computer scan systems described herein.

Referring to Figure 16A, the system microprocessor 1600 is connected to an interface 1602 which is in turn connected to the optical scan element. The system microprocessor 1600 is also connected to a second interface 1604 which is in turn connected to those other elements of the system whose status and/or condition is of interest to the user. Such elements will typically include, for example, the photodetector or sensor, the decoder, the battery or any other element regarding which status or condition information is required. Figure 16B is an exemplary list of some of the items normally of interest to the user. It will be understood by those skilled in the art that the list is provided, not as a comprehensive listing of status and condition items of interest since such items are well-known in the art. Rather the list is provided simply to indicate the types of status and condition items under discussion.

Information received from the elements to which the interfaces are connected is received via the interfaces by the processor 1600 and compared to threshold information stored in and retrieved from the processor's or a separate memory device 1606. If desired, the information can also be stored in the memory 1606. Based upon the comparison, the processor can generate and transmit a signal to the system display 1608 which results in a multiple digit numeric, alpha-numeric or graphic display of information representing the status and/or condition of one or more elements of the system.

Additionally or alternatively, the processor 1600 transmits the generated signal to a sound generator circuit 1610, which optionally includes a synthesizer. Sound generator circuit 1610 applies the received signal to a recognition algorithm, stored for example in the memory 1606, and generates and transmits a signal to audio transducer 1612 reflective of the received signal. The transducer 1612, which is preferably a high-grade, micro audio-speaker, is driven by the signal from the sound generating circuit to produce an audible synthesized or tone sound which provides the user with information representing the status and/or condition of one or more elements of the system.

With regard to Figure 16B, the designations used should be clear to those skilled in the art. However, to avoid any possible questions which may arise as to the meaning of certain of the listed designations, "1-D decoder" refers to a single dimension bar code decoder, "macro PDF decoder" refers to a specific subset within the PDF-417 symbology type, "heap space" refers to a portion of memory, "ADF rule" refers to advance data formatting rules, and "PDF optional field" refers to an area within the PDF symbol reserved for optical encoding of special data. It should also be understood that the list of status/conditions is, exemplary in nature, since the status and condition indications required or desired are well understood in the art.

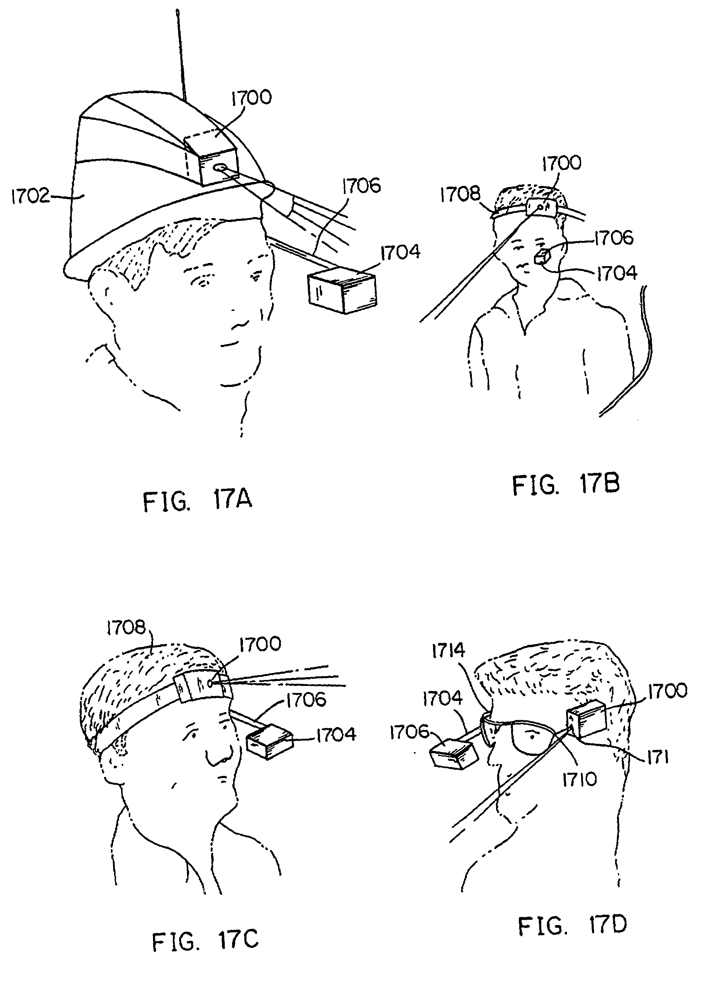

Figures 17A-17D depict alternative mountings which are not in accordance with the invention, for the optical scan module of Figures 2, 3, 5 and 12 and for the microphone/amplifier of Figures 15A and 15B. Using any of the Figure 17A-17D arrangements, aiming is done by movement of the user's head.

In Figure 17A the scan module 1700, which is identical to module 1 of Figures 2, 3 and 5 or 400 of Figure 12 is mounted in helmet 1702. A microphone/amplifier assembly 1704, which preferably includes the microphone and amplifier, 1500 and 1502 of Figures 15A and B, is mounted from a support member 1706 which is attached to helmet 1702. Support member 1706 may be either of plastic or metal and is preferably deformable so that a user can, by bending member 1706 in an appropriate direction or directions, adjust the location of assembly 1704 to a comfortable position in the general proximity of the user's mouth and outside the user's line of sight and the scan module field of view.

Figure 17B depicts a support arrangement similar to that of Figure 17A, with all like elements designated with reference numerals identical to those of Figure 17A. The primary difference between Figure 17A and 17B is that the optical module 1700 is supported in Figure 17B by an adjustable headband 1708. The headband may be made of flexible elastic material or may have a buckle or other means for adjusting the headband to the size of the user's head so that the optical module 1700 and assembly 1704 are comfortably supported during operation of the system by the user. The optical module 1700 and support member 1706 are attached to the headband 1708 in a removable manner using any conventional technique which does not make the wearing of the headband uncomfortable to the user. It will be noted that optical module is positioned over one of the user's eyes which some user's find to be the preferable positioning for aiming purposes.

The support arrangement of Figure 17C is identical to that of Figure 17B, except in Figure 17C the optical module 1700 is positioned to be centered between the user's eyes. This positioning of the optical module 1700 is found, by some user's, preferable for aiming and from a comfort of use viewpoint.

Figure 17D depicts still another arrangement wherein the optical module 1700 and support member 1706 are attached to an eye glass frame 1710. This arrangement is particularly suitable where the system is being used in areas where safety glasses are required or for user's who normally wear eye glasses.

All of the disclosed arrangements with radio frequency communications capabilities preferably operate for usages in the United States in a range of 902 to 928 MHz, or 2.4 GHz, and for European applications at approximately 433.9 MHz. Other frequencies would be used elsewhere depending on the applicable governmental regulations for radio frequency transmissions. Additionally, all of the transceivers may optionally include a modem with an RF 232 interface for facilitating communications with the base station or other peripheral items. The RF transceivers also include filters on the receive side to filter receive signals.

Although certain embodiments of the invention have been discussed without reference to the scanner housing, triggering mechanism and other features of conventional scanners, it will be understood that a variety of housing styles and shapes and triggering mechanisms could be used. Other conventional features can also be included if so desired. The invention is directed primarily to a portable hand-held scanning device and thus is preferably implemented using miniaturized components such as those described in the materials referenced herein, or otherwise known in the art.

Additionally, even though the present invention has been described with respect to reading one or two dimensional bar code and matrix array symbols, it is not limited to such embodiments, but may also be applicable to more complex indicia scanning or data acquisition applications. It is conceivable that the method of the present invention may also find application for use with various machine vision or optical character recognition applications in which information is derived from indicia such as printed characters or symbols, or from the surface or configurational characteristics of the article being scanned.

In all of the various embodiments, the elements of the scanner may be implemented in a very compact assembly or package such as a single printed circuit board or integral module.

## Claims

1. An optical scanning system for reading indicia of differing light reflectivity comprising:
a finger mountable optical scan module (1) including a light emitter for emitting light directed at said indicia and a light detector for detecting the reflection of light from said indicia; and
a first peripheral module (7) mountable to an arm or wrist of the user (3) for receiving a first signal corresponding to said detected reflection of light from said optical scan module (1);
characterized by
a second peripheral module (9) mountable to the user (3) and establishing a wireless communication link with said first module (7) for receiving from said first module (7) a second signal corresponding to said first signal.

2. A system according to claim 1, wherein said optical scan module (1) is adapted to be mounted on a single finger.

3. A system according to claim 1, wherein said at least one finger and said arm or wrist are on the same side of the user's'body.

4. A system according to claim 3, wherein said second signal is an analog signal and said second peripheral module (9) includes a means (9b) for converting said second signal to a digitized signal.

5. A system according to claim 4, wherein said second peripheral module (9) includes means (9b) for processing said digitized signal.

6. A system according to claim 5, wherein said processing means (9b) includes decoder means for decoding information contained in said digitized signal.

7. A system according to claim 6, wherein said second peripheral module (9) includes indicator means (9c) for signaling the user when the decoding has been successfully accomplished by the decoder means.

8. A system according to claim 6, wherein said second peripheral module (9) includes radio frequency transmitter (9d) for transmitting said decoded information to a base station (13).

9. A system according to claim 6, wherein second peripheral module (9) includes a data storage device (9h) for storing said decoded information and a keypad (9e) and display (9f), or touch screen, for inputting data to said system and displaying said decoded information.

10. A system according to claim 9, wherein said second peripheral module (9) includes a wireless transmitter (9i) for transmitting said input data and said first peripheral module (7) includes a wireless receiver (7g) for receiving said transmitted input data.

11. A system according to claim 5, wherein said second peripheral module (9) is mounted on an arm or wrist of the user which is on a different side of the user's body from the arm or wrist on which the first peripheral module (7) is mounted.

12. A system according to claim 3, wherein said first signal is an analog signal and said first peripheral module (7) includes means (7e) for converting said first signal to a digitized signal.

13. A system according to claim 12, wherein said first peripheral module (7) includes means (7e) for processing said digitized signal.

14. A system according to claim 13, wherein said processing means (7e) includes decoder means for decoding information contained in said digitized signal.

15. A system according to claim 14, wherein said first peripheral module (7) includes indicator means (7f) for signaling the user when the decoding has been successfully accomplished by the decoding means.

16. A system according to claim 15, wherein said second peripheral module (9) is mounted on another arm or wrist of the user.

17. A system according to claim 16, wherein said second signal includes said decoded information.

18. A system according to claim 17, wherein second peripheral module (9) includes a data storage device (9h) for storing said decoded information.

19. A system according to claim 17, wherein said second peripheral module (9) includes a radio frequency transmitter (9d) for transmitting said decoded information to a base station (13).

20. A system according to claim 17, wherein said second peripheral module (9) includes a keypad (9e) and display (9f), or touch screen, for inputting data to said system and displaying said decoded information.

21. A system according to claim 20, wherein (i) said second peripheral module (a) includes a first radio frequency transceiver capable of receiving said second signal and transmitting said input data and (ii) said first peripheral module (7) includes a second radio frequency transceiver (7g) capable of transmitting said second signal and receiving said transmitted input data.

22. A system according to claim 15, wherein said second signal includes said decoded information.

23. A system according to claim 1, wherein the frequency of said received second signal is selectable by the user.

24. A system according to claim 1, further comprising a cable (5) connecting said optical scan module (1) and said first peripheral module (7).

25. A system according to claim 24, wherein said cable (5a) has an exposed length extending between said optical scan module (1) and said first peripheral module (7), and said first peripheral module (7) includes a cable reel (7n) adapted to accept said cable, whereby said cable (5a) is extendable from and retractable onto said cable reel (7n) to adjust said exposed length of cable (5a).

26. The system according to claim 1, wherein said second peripheral module (9) is mountable to the wearer's other arm or wrist.

27. A system according to claim 2, wherein
said optical scan module (1) has a housing portion (1c) for housing said light emitter and light detector and a ring mount portion (1d); and
said housing portion (1c) is rotatable connected to said ring mount portion (1d).

28. a system according to claim 27, wherein said rotatable connection provides at least one rotational degree of freedom.

29. A system according to claim 27, wherein said housing is rotatable in a plane approximately parallel to a plane tangential to the circumference of said ring mount portion at said rotatable connection.

30. A system according to claim 1 wherein
said first peripheral module (7) includes a receiver (7b, 7d) for receiving said first signal corresponding to said detected reflection of light from said optical scan module (1);
said second peripheral module (9) includes a wireless receiver (9a) for receiving said second signal, corresponding to said first signal, from said first peripheral module (7);
wherein said first signal is an analog signal, said first peripheral module (7) includes a digitizer (7e) for converting said first signal to a digitized signal and a decoder means for decoding information contained in said digitized signal and said decoder is automatically activated upon said receiver (7b, 7d) receiving a signal indicative of said indicia.

31. A system according to claim 30, wherein (i) said first peripheral module (7) includes an indicator (7f) for producing an audible signal when the decoding has been successfully accomplished by the decoder and (ii) said light emitter is automatically deactivated in response to said audible signal.

32. system according to claim 30, wherein (i) said first peripheral module (7) includes an indicator (7f) for producing an audible signal when the decoding has been successfully accomplished by the decoder and (ii) said light emitter and said light detector are automatically deactivated in response to said audible signal.

33. A system according to claim 30, wherein said light emitter is automatically deactivated within a predetermined period of time after activation.

34. A system according to claim 30, wherein said light emitter and said light detector are automatically deactivated within a predetermined period of time after activation.

## Patentansprüche

1. Optisches Abtastsystem zum Lesen von Anzeigemitteln von unterschiedlicher Lichtreflektivität, welches folgendes aufweist:
ein auf einem Finger zu befestigendes Abtastmodul (1), welches einen Lichtemitter bzw. Lichthaussendemittel aufweist, um Licht zu emittieren, welches auf die Anzeigemittel gerichtet wird, und einen Lichtdetektor zum Detektieren der Reflektion des Lichtes von den Anzeigemitteln; und
ein erstes Peripheriemodul (7), welches an einem Arm oder Handgelenk des Anwenders (3) zu montieren ist, welches ein erstes Signal entsprechend der detektierten Reflektion des Lichtes von dem optischen Abtastmodul (1) aufnimmt,
gekennzeichnet durch
ein zweites Peripheriemodul (9), welches am Anwender (3) zu befestigen ist und eine drahtlose Kommunikationsverbindung mit dem ersten Modul (7) einrichtet, um von dem ersten Modul (7) ein zweites Signal entsprechend dem ersten Signal zu empfangen.

2. System nach Anspruch 1, wobei das optische Abtastmodul (1) geeignet ist, um an einem einzigen Finger befestigt zu werden.

3. System nach Anspruch 1, wobei der mindestens eine Finger und der Arm oder das Handgelenk auf der gleichen Seite des Körpers des Anwenders sind.

4. System nach Anspruch 3, wobei das zweite Signal ein Analogsignal ist, und wobei das zweite Peripheriemodul (9) Mittel (9b) aufweist, um das zweite Signal in ein digitalisiertes Signal umzuwandeln.

5. System nach Anspruch 4, wobei das zweite Peripheriemodul (9) Mittel (9b) aufweist, um das Digitalsignal zu verarbeiten.

6. System nach Anspruch 5, wobei die Verarbeitungsmittel (9b) Decodermittel aufweisen, um Informationen zu decodieren, die in dem digitalisierten Signal enthalten sind.

7. System nach Anspruch 6, wobei das zweite Peripheriemodul (9) Anzeigemittel (9c) aufweist, um dem Anwender zu signalisieren, wann die Decodierung erfolgreich von den Decodermitteln erreicht worden ist.

8. System nach Anspruch 6, wobei das zweite Peripheriemodul (9) einen Funkfrequenzsender (9d) aufweist, um die decodierte Information an eine Basisstation (13) zu senden.

9. system nach Anspruch 6, wobei das zweite Peripheriemodul (9) eine Datenspeichervorrichtung (9h) aufweist, um die decodierten Informationen zu speichern, und eine Tastatur (9e) und eine Anzeige (9f) oder einen berührungsempfindlichen Bildschirm zur Eingabe von Daten in das System und zur Anzeige der decodierten Informationen.

10. System nach Anspruch 9, wobei das zweite Peripheriemodul (9) einen drahtlosen Sender (9i) aufweist, um die eingegebenen Daten zu senden, und wobei das erste Peripheriemodul (7) einen drahtlosen Empfänger (7g) aufweist, um die übertragenen Eingangsdaten zu empfangen.

11. System nach Anspruch 5, wobei das zweite Peripheriemodul (9) an einem Arm oder Handgelenk des Anwenders befestigt ist, der auf einer anderen Seite des Körpers des Anwenders als der Arm oder das Handgelenk gelegen ist, an dem das Peripheriemodul (7) befestigt ist.

12. System nach Anspruch 3, wobei das erste Signal ein Analogsignal ist, und wobei das erste Peripheriemodul (7) Mittel (7e) aufweist, um das erste Signal in ein digitalisiertes Signal umzuwandeln.

13. System nach Anspruch 12, wobei das erste Peripheriemodul (7) Mittel (7e) aufweist, um das digitalisierte Signal zu verarbeiten.

14. System nach Anspruch 13, wobei die Verarbeitungsmittel (7e) Decodermittel aufweisen, um Informationen zu decodieren, die in dem digitalisierten Signal enthalten sind.

15. System nach Anspruch 14, wobei das erste Peripheriemodul (7) Anzeigemittel (7f) aufweist, um dem Anwender zu signalisieren, wann die Decodierung erfolgreich von den Decodermitteln erreicht worden ist.

16. System nach Anspruch 15, wobei das zweite Peripheriemodul (9) an einem anderen Arm oder Handgelenk des Anwenders befestigt ist.

17. System nach Anspruch 16, wobei das zweite Signal die decodierte Information aufweist.

18. System nach Anspruch 17, wobei das zweite Peripheriemodul (9) eine Datenspeichervorrichtung (9h) aufweist, um die decodierten Informationen zu speichern.

19. System nach Anspruch 17, wobei das zweite Peripheriemodul (9) einen Funkfrequenzsender (9d) aufweist, um die decodierte Information an eine Basisstation (13) zu übertragen.

20. System nach Anspruch 17, wobei das zweite Peripheriemodul (9) eine Tastatur (9e) und eine Anzeige (9f) oder einen berührungsempfindlichen Bildschirm aufweist, um Daten in das System einzugeben und die decodierten Informationen anzuzeigen.

21. System nach Anspruch 20, wobei (i) das zweite Peripheriemodul (9) einen ersten Funkfrequenzsender/empfänger aufweist, der das zweite Signal empfangen kann und das Eingabesignal senden kann, und wobei (ii) das erste Peripheriemodul (7) einen zweiten Funkfrequenzsender/empfänger (7g) aufweist, der das zweite Signal senden kann und die gesendeten Eingangsdaten empfangen kann.

22. System nach Anspruch 15, wobei das zweite Signal die decodierte Information aufweist.

23. System nach Anspruch 1, wobei die Frequenz des empfangenen zweiten Signals vom Anwender auszuwählen ist.

24. System nach Anspruch 1, welches weiter ein Kabel (5) aufweist, welches das optische Abtastmodul (1) und das erste Peripheriemodul (7) verbindet.

25. System nach Anspruch 24, wobei das Kabel (5a) eine freigelegte Länge besitzt, die sich zwischen dem optischen Abtastmodul (1) und dem ersten Peripheriemodul (7) erstreckt, und wobei das erste Peripheriemodul (7) eine Kabelrolle (7n) aufweist, die geeignet ist, um das Kabel aufzunehmen, wobei das Kabel (5a) von der Kabelrolle (7n) herauszuziehen und einzuziehen ist, um die freigelegte Länge des Kabels (5a) einzustellen.

26. System nach Anspruch 1, wobei das zweite Peripheriemodul (9) auf dem anderen Arm oder Handgelenk des Trägers zu befestigen ist.

27. System nach Anspruch 2, wobei das optische Abtastmodul (1) einen Gehäuseteil (1c) aufweist, um den Lichtemitter und den Lichtdetektor aufzunehmen, und einen Ringbefestigungsteil (1d); und
wobei der Gehäuseteil (1c) drehbar mit dem Ringbefestigungsteil (1d) verbunden ist.

28. System nach Anspruch 27, wobei die drehbare Verbindung mindestens einen Drehfreiheitsgrad bietet.

29. System nach Anspruch 27, wobei das Gehäuse in einer Ebene ungefähr parallel zu einer Ebene tangential zum Umfang des Ringbefestigungsteils an der drehbaren Verbindung drehbar ist.

30. System nach Anspruch 1, wobei das erste Peripheriemodul (7) einen Empfänger (7b, 7d) aufweist, um das erste Signal entsprechend der detektierten Reflektion des Lichtes von dem optischen Abtastmodul zu empfangen;
wobei das zweite Peripheriemodul (9) einen drahtlosen Empfänger (9a) aufweist, um das zweite Signal entsprechend dem ersten Signal von dem ersten Peripheriemodul (7) zu empfangen;
wobei das erste Signal ein Analogsignal ist, wobei das erste Peripheriemodul (7) eine Digitalisiervorrichtung (7e) aufweist, um das erste Signal in ein digitalisiertes Signal umzuwandeln, und Decodermittel zum Decodieren von Informationen, die in dem digitalisierten Signal enthalten sind, und wobei der Decoder automatisch daraufhin aktiviert wird, daß der Empfänger (7b, 7d) ein Signal empfängt, welches die Anzeigemittel anzeigt.

31. System nach Anspruch 30, wobei (i) das erste Peripheriemodul (7) eine Anzeige (7f) aufweist, um ein hörbares Signal zu erzeugen, wenn die Decodierung erfolgreich vom Decoder durchgeführt worden ist, und wobei (ii) der Lichtemitter automatisch ansprechend auf das hörbare Signal deaktiviert wird.

32. System nach Anspruch 30, wobei (i) das erste Peripheriemodul (7) eine Anzeige (7f) aufweist, um ein hörbares Signal zu erzeugen, wenn die Decodierung erfolgreich vom Decoder ausgeführt worden ist, und wobei (ii) der Lichtemitter und der Lichtdetektor automatisch ansprechend auf das hörbare Signal deaktiviert werden.

33. System nach Anspruch 30, wobei der Lichtemitter automatisch innerhalb einer vorbestimmten Zeitperiode nach der Aktivierung deaktiviert wird.

34. System nach Anspruch 30, wobei der Lichtemitter und der Lichtdetektor automatisch innerhalb einer vorbestimmten Zeitperiode nach der Aktivierung deaktiviert werden.

## Revendications

1. Système de balayage optique pour lire des signes, ayant des réflectivités optiques différentes, comprenant :
un module de balayage optique (1) pouvant être monté sur un doigt comportant un émetteur de lumière destiné à émettre de la lumière dirigée vers lesdits signes et un détecteur de lumière destiné à détecter la réflexion de la lumière par lesdits signes ; et
un premier module périphérique (7) pouvant être monté sur un bras ou un poignet de l'utilisateur (3), pour recevoir un premier signal correspondant à ladite détection de réflexion de lumière en provenance dudit module de balayage optique (1) ; caractérisé par
un second module périphérique (9) pouvant être monté sur l'utilisateur (3) et établissant une liaison de communication sans fil avec ledit premier module (7) pour recevoir dudit premier module (7) un second signal correspondant audit premier signal.

2. Système selon la revendication 1, dans lequel ledit module de balayage optique (1) est conçu pour être monté sur un seul doigt.

3. Système selon la revendication 1, dans lequel ledit au moins un doigt et ledit bras ou poignet sont du même côté du corps de l'utilisateur.

4. Système selon la revendication 3, dans lequel ledit second signal est un signal analogique et ledit second module périphérique (9) comporte un moyen (9b) pour convertir ledit second signal en un signal numérisé.

5. Système selon la revendication 4, dans lequel ledit second module périphérique (9) comporte un moyen (9b) pour traiter ledit signal numérisé.

6. Système selon la revendication 5, dans lequel ledit moyen de traitement (9b) comporte un moyen décodeur pour décoder des informations contenues dans ledit signal numérisé.

7. Système selon la revendication 6, dans lequel ledit second module périphérique (9) comporte un moyen indicateur (9c) pour signaler à l'utilisateur l'instant où le décodage a été effectué avec succès par le moyen décodeur.

8. Système selon la revendication 6, dans lequel ledit second module périphérique (9) comporte un émetteur radio (9d) pour émettre lesdites informations décodées vers une station de base (13).

9. Système selon la revendication 6, dans lequel ledit second module périphérique (9) comporte un dispositif de stockage de données (9h) pour stocker lesdites informations décodées et un pavé numérique (9e) et un afficheur (9f), ou un écran tactile, pour fournir en entrée des données audit système et afficher lesdites informations décodées.

10. Système selon la revendication 9, dans lequel ledit second module périphérique (9) comporte un émetteur sans fil (9i) pour émettre lesdites données d'entrée et dans lequel ledit premier module périphérique (7) comporte un récepteur sans fil (7g) pour recevoir lesdites données d'entrée émises.

11. Système selon la revendication 5, dans lequel ledit second module périphérique (9) est monté sur un bras ou un poignet de l'utilisateur, qui se trouve d'un côté différent du corps de l'utilisateur par rapport au bras ou au poignet sur lequel est monté le premier module périphérique (7).

12. Système selon la revendication 3, dans lequel ledit premier signal est un signal analogique et ledit premier module périphérique (7) comporte un moyen (7e) pour convertir ledit premier signal en un signal numérisé.

13. Système selon la revendication 12, dans lequel ledit premier module périphérique (7) comporte un moyen (7e) pour traiter ledit signal numérisé.

14. Système selon la revendication 13, dans lequel ledit moyen de traitement (7e) comporte un moyen décodeur pour décoder des informations contenues dans ledit signal numérisé.

15. Système selon la revendication 14, dans lequel ledit premier module périphérique (7) comporte un moyen indicateur (7f) pour signaler à l'utilisateur l'instant où le décodage a été effectué avec succès par le moyen de décodage.

16. Système selon la revendication 15, dans lequel ledit second module périphérique (9) est monté sur un autre bras ou poignet de l'utilisateur.

17. Système selon la revendication 16, dans lequel ledit second signal contient lesdites informations décodées.

18. Système selon la revendication 17, dans lequel ledit second module périphérique (9) comporte un dispositif de stockage de données (9h) pour stocker lesdites informations décodées.

19. Système selon la revendication 17, dans lequel ledit second module périphérique (9) comporte un émetteur radio (9d) pour émettre lesdites informations décodées vers une station de base (13).

20. Système selon la revendication 17, dans lequel ledit second module périphérique (9) comporte un pavé numérique (9e) et un afficheur (9f), ou un écran tactile, pour fournir en entrée des données audit système et afficher lesdites informations décodées.

21. Système selon la revendication 20, dans lequel (i) ledit second module périphérique (9) comporte un premier émetteur-récepteur radio capable de recevoir ledit second signal et d'émettre lesdites données d'entrée et (ii) ledit premier module périphérique (7) comporte un second émetteur-récepteur radio (7g) capable d'émettre ledit second signal et de recevoir lesdites données d'entrée émises.

22. Système selon la revendication 15, dans lequel ledit second signal contient lesdites informations décodées.

23. Système selon la revendication 1, dans lequel la fréquence dudit second signal reçu peut être sélectionnée par l'utilisateur.

24. Système selon la revendication 1, comprenant en outre un câble (5) connectant ledit module de balayage optique (1) audit premier module périphérique (7).

25. Système selon la revendication 24, dans lequel ledit câble (5a) a une longueur exposée s'étendant entre ledit module de balayage optique (1) et ledit premier module périphérique (7), et ledit premier module périphérique (7) comporte une bobine de câble (7u) conçue pour recevoir ledit câble de telle sorte que ledit câble (5a) soit extensible depuis, et rétractable vers ladite bobine de câble (7u), pour ajuster ladite longueur exposée de câble (5a) .

26. Système selon la revendication 1, dans lequel ledit second module périphérique (9) peut être monté sur l'autre bras ou poignet du porteur.

27. Système selon la revendication 2, dans lequel ledit module de balayage optique (1) comporte une partie formant boîtier (1c) pour loger ledit émetteur et ledit détecteur de lumière et une partie de montage annulaire (1d) ; et
ladite partie formant boîtier (1c) est connectée de façon rotative à ladite partie de montage annulaire (1d).

28. Système selon la revendication 27, dans lequel ladite connexion rotative offre au moins un degré de liberté en rotation.

29. Système selon la revendication 27, dans lequel ledit boîtier est rotatif dans un plan approximativement parallèle à un plan tangent à la circonférence de ladite partie de montage annulaire à l'emplacement de ladite connexion rotative.

30. Système selon la revendication 1, dans lequel
ledit premier module périphérique (7) comporte un récepteur (7b, 7d) pour recevoir ledit premier signal correspondant à ladite réflexion détectée de lumière provenant dudit module de balayage optique (1) ;
ledit second module périphérique (9) comporte un récepteur sans fil (9a) pour recevoir ledit second signal correspondant audit premier signal, dudit premier module périphérique (7) ;
dans lequel ledit premier signal est un signal analogique, ledit premier module périphérique (7) comporte un numériseur (7e) pour convertir ledit premier signal en un signal numérisé et un moyen décodeur pour décoder des informations contenues dans ledit signal numérisé et ledit décodeur est automatiquement activé lorsque ledit récepteur (7b, 7d) reçoit un signal représentatif desdits signes.

31. Système selon la revendication 30, dans lequel (i) ledit premier module périphérique (7) comporte un indicateur (7f) pour produire un signal audible lorsque ledit décodage a été effectué avec succès par le décodeur et (ii) ledit émetteur de lumière est automatiquement désactivé en réponse audit signal audible.

32. Système selon la revendication 30, dans lequel (i) ledit premier module périphérique (7) comporte un indicateur (7f) pour produire un signal audible lorsque le décodage a été effectué avec succès par le décodeur et (ii) ledit émetteur de lumière et ledit détecteur de lumière sont automatiquement désactivés en réponse audit signal audible.

33. Système selon la revendication 30, dans lequel ledit émetteur de lumière est automatiquement désactivé au cours d'une période de temps prédéterminée après l'activation.

34. Système selon la revendication 30, dans lequel ledit émetteur de lumière et ledit détecteur de lumière sont automatiquement désactivés au cours d'une période de temps prédéterminée après l'activation.
